# EUROPEAN PATENT APPLICATION

(11) **EP 2 554 931 A1**
(43) Date of publication of application: **06.02.2013**
(21) Application number: 11176309.0
(22) Date of filing: 02.08.2011
(51) Int. Cl.: F25D 23/00, B60B 33/00

(54) **Support and movement equipment**

(71) Applicant: Girardini S.r.l., 38079 Tione di Trento (TN) (IT)
(72) Inventor: Aldrighetti, Marcello, 38070 Ragoli, Trento (IT)
(74) Representative: Manfrin, Marta

(57) **Abstract**

The present disclosure relates to a support and movement equipment (1, 10, 110, 1010) for supporting a load. The support and movement equipment includes at least one support plate (2) and two walls integrally associated to the support plate (2) and facing the one to the other in a spaced apart relationship. The support and movement equipment (1, 10, 110, 1010) comprises a wheel (3) provided with a rotation pin (31), wherein the wheel (3) is interposed between the two walls (20) and wherein the support and movement equipment (1, 10, 110, 1010) includes a rotation seat (204, 114) adapted to receive the rotation pin (31). The rotation seat (204, 114) is open on an edge (211, 1211) of a respective wall (20) by means of an opening (203), which allows an insertion of the rotation pin (31) into the rotation seat (204, 114). The support and movement equipment (1, 10, 110, 1010) may include retaining elements (300) adapted to prevent a coming out of the rotation pin (31) from the rotation seat (204, 114) through the opening (203).

## Description

The present disclosure generally refers to the field of support and movement devices adapted to be placed behind or under apparatuses or electrical household appliances, especially those of high dimensions and weight, like e.g. a refrigerator or an oven, in order to foster a displacement, or of devices referred to as "roller beds", of idle-type, used for instance in so-called gravity apparatuses.

More specifically, the present disclosure refers to a support and movement equipment for supporting a load, and allowing a facilitated displacement or movement of the load itself.

A known support and movement equipment generally comprises a support plate provided with wheels or rollers, mounted idle.

In particular, the support plate is provided, on one of its faces, with pairs of walls facing each other, between which the wheel or roller is located and which also act as support for the wheel. In particular, each wheel is provided with a rotation pin, which is axially inserted, i.e. along the length of the pin, into respective round holes obtained in the above-mentioned walls.

To retain the pin and the wheel between the two walls, the support plate is provided with retainers, located close to the respective walls and adapted to interfere with the ends of the pin to prevent the pin from going out of the respective round hole of each wall. Such retainers are sheet metal parts cut out from the support plate and raised toward each of the walls at the height of the pin.

Though advantageous under many standpoints, the known support and movement equipment entails some drawbacks that have yet to be overcome.

In particular, a drawback lies in the fact that the assembling of the wheel-pin set between the walls is complex. Moreover, the manufacturing of the retainers lengthens the machining times of the support and movement equipment.

In particular, in order to manufacture the retainers, an operator, after having placed the wheel between the two walls and inserted the pin into the holes, has to cut out parts of the support plate and raise/bend the cut-out parts so that, in a raised position, such parts may interfere with the pin.

The present disclosure is based on the technical problem of providing a support and movement equipment allowing to overcome the drawbacks mentioned above with reference to the known art and/or to attain further advantages and/or to have further features.

This is obtained by providing a support and movement equipment according to independent claim 1, a crossbar for electrical household appliance according to claim 15, a roller bed according to claim 16 and an assembling method according to independent claim 17. Specific embodiments of the subject-matter of the present disclosure are defined in the respective dependent claims.

In practice, according to an aspect of the present disclosure, the support and movement equipment includes at least one rotation seat adapted to receive the rotation pin, i.e. a corresponding portion of the pin. The rotation seat is open on an edge of a respective wall by means of an opening. It follows that the rotation seat is open toward the edge by means of the above-mentioned opening. The set formed by the rotation seat and the opening defines a sort of notch or recess between two wall portions of each wall.

The insertion zone or opening is the proximal or initial zone of the notch or recess, whereas the rotation seat is the end or final zone of the notch or recess. Such a notch may be facing toward a floor for supporting the support and movement equipment so that the wheel/roller be mainly exposed downward, e.g. during use in an undercarriage mode of the support and movement equipment.

Such a notch may be facing on the opposite side with respect to a floor, therefore upward, so that the wheel/roller be mainly exposed upward and foster the movement of the load there above, e.g. during use of the support and movement equipment in roller bed mode. However, "upward position" or "upward" is not to be construed as limitative terms within the scope of the present disclosure.

The edge may be a wall edge which is opposite with respect to the plate (therefore the wheel is inserted from the side opposite to the plate), or the edge may be a wall edge that therefore is facing toward, or is adjacent to the plate (therefore the wheel is inserted from the side of the plate).

In an embodiment of the present disclosure, the insertion of the pin through the opening occurs along a direction which is substantially orthogonal to the axis of rotation of the pin.

In an embodiment of the present disclosure, the support and movement equipment includes, retaining elements, also called holding elements, associated to the opening, which are adapted to prevent an accidental coming out, e.g., by gravity, of the rotation pin from the rotation seat through the opening.

Further advantages and the operation modes of the subject of the present disclosure will be made evident in the following detailed description of preferred embodiments thereof, given by way of example and not for limitative purposes.

It is also to be understood that all possible combinations of features and embodiments described with reference to the following detailed description, fall within the scope of the present disclosure.

Reference will be made to the figures of the annexed drawings, wherein:
- Figure 1 shows a partially sectional view of a refrigerator including a crossbar for electrical household appliance according to the present disclosure;
- Figure 2 shows a view of a support and movement equipment according to the present disclosure;
- Figure 3 shows a view of a support and movement equipment according to the present disclosure;
- Figure 4 shows a view with detached parts of a support and movement equipment according to the present disclosure;
- Figure 5 shows a side view of a support plate according to the present disclosure;
- Figure 6 shows a side view of a support plate according to the present disclosure;
- Figure 7 shows a view with detached parts of a support and movement equipment according to the present disclosure;
- Figure 8 shows a side view of a support plate according to the present disclosure;
- Figure 9 shows a side view of a support plate according to the present disclosure;
- Figure 10 shows a view of a support plate according to the present disclosure;
- Figure 11 shows a view of a support and movement equipment according to the present disclosure;
- Figure 12 shows a side view of a support and movement equipment according to the present disclosure;
- Figure 13 shows a view of a support plate according to the present disclosure;
- Figure 14 shows a plan view of a support plate according to the present disclosure;
- Figure 15 shows a sectional view along line XV-XV of Figure 14;
- Figure 16 shows a side view of a support and movement equipment according to the present disclosure;
- Figure 17 shows a view of a support and movement equipment according to the present disclosure.
With reference to the annexed drawings, a support and movement equipment according to the present disclosure, and in particular made according to different respective embodiments, is denoted by reference numbers 1, 10, 110, 1010.

The support and movement equipment 1, 10, 110, 1010 may be used as an undercarriage, and therefore be moved along with a load for transport of the load itself, or as a so-called roller bed, and therefore remain stationary in a place and allow displacement of a load which is displaced by gravity thereon.

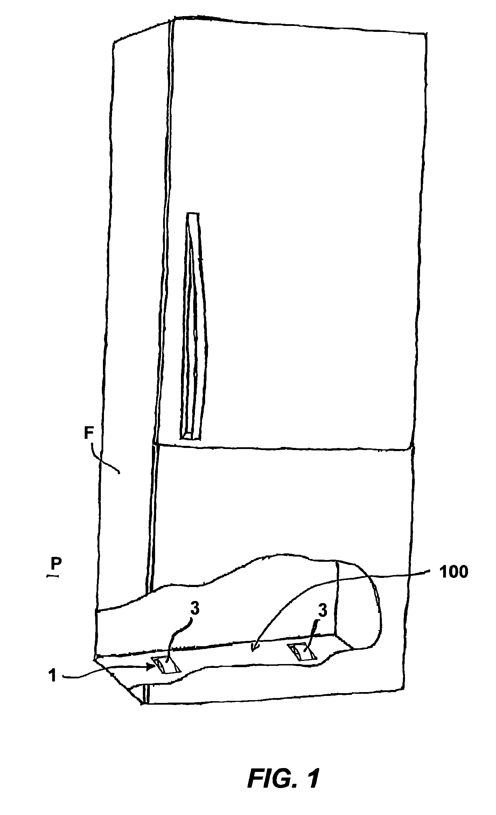

In particular, in case of operation as an undercarriage, the support and movement equipment 1, 10, 110, 1010 may be shaped like a crossbar for electrical household appliance, denoted by reference number 100 in Figure 1, which can be placed below a refrigerator F, or a similar apparatus, for supporting the refrigerator F during a transport. More specifically, the support and movement equipment 1, 10, 110, 1010 may be placed below the compressor (not illustrated) of the refrigerator.

In other embodiments (not visible in the drawings), the support and movement equipment 1, 10, 110, 1010 is a so-called roller bed of a gravity scaffold, or of a similar gravity conveyor, or of another apparatus, utilized for transport of a load thereabove. In particular, in this latter embodiment, the support and movement equipment 1, 10, 110, 1010 is part of a gravity apparatus, i.e. of an apparatus including slightly tilted planes that, by means of wheel or roller sliding tracks, formed by one or more of said support equipments 1, 10, 110, allow a load unit sliding without any automation, by exploiting the sole force of gravity.

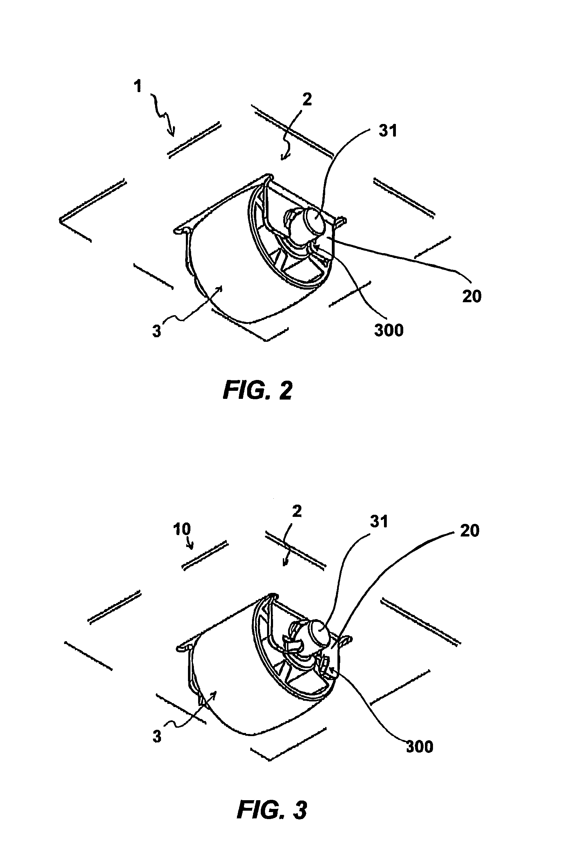

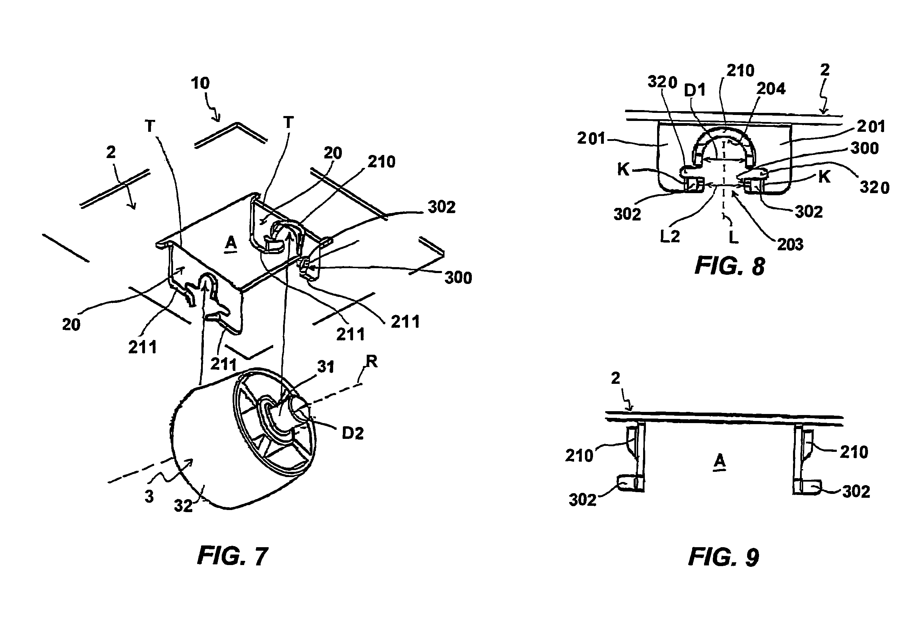

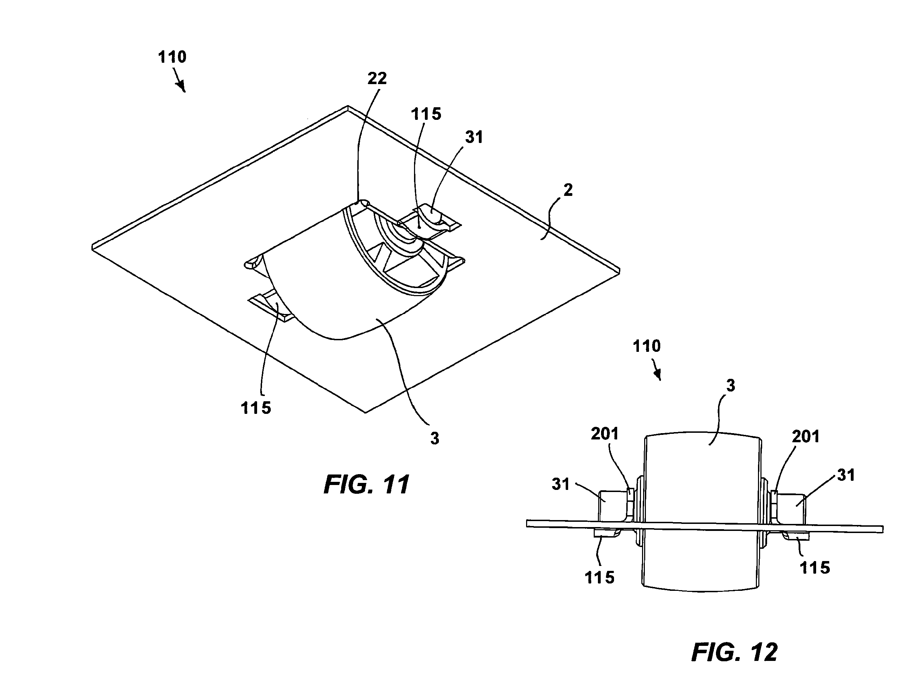

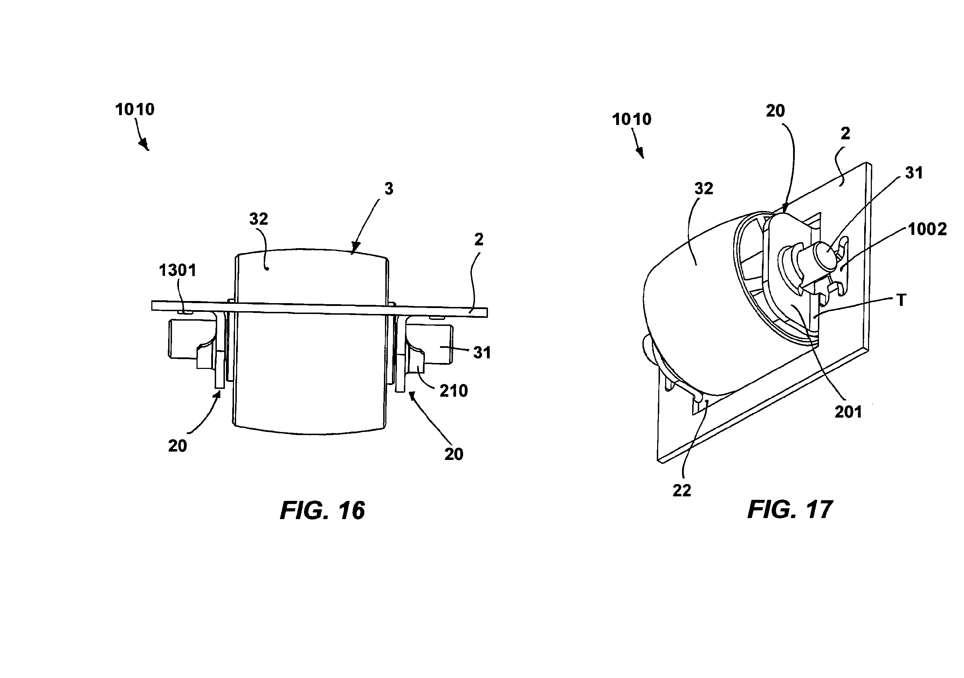

The support and movement equipment 1, 10, 110, 1010 according to the present disclosure, and in all embodiments illustrated herein, includes a support plate 2, onto which a load is intended to be placed, and at least one wheel, or roller, 3 provided with a rotation pin 31. It may be observed that the support and movement equipment 1, 10, 110, 1010 is only partially illustrated in Figures 2-17, in relation to the zone of rotation of a wheel or roller 3, but it is to be understood that the support and movement equipment 1, 10, 110, 1010 may comprise one or more, i.e., a plurality of, wheels 3, associated to the support plate 2.

More specifically, the support equipments 1, 10, 110, 1010 are embodiments according to the present disclosure, which, though different from each other, share the following features.

In particular, the support plate 2 includes two sheet metal portions or walls 20, facing the one to the other and projecting from the support plate 2. The walls 20 are in a spaced apart relationship and define between them an intermediate housing A.

The wheel 3 is arranged in the housing A between the walls 20.

In the embodiments illustrated in the figures, the support plate 2 is a metal sheet. In particular, the walls 20 are elements which form a single piece with the support plate 2, and are obtained by cutting out and bending/raising the metal sheet portions over the surface of the support plate 2 to define bends T, and so as to form a cavity or hole 22 in the support plate 2. More specifically, the walls 20 form an angle of about 90° with respect to the support plate 2.

According to an aspect of the present disclosure, the support and movement equipment 1, 10, 110, 1010 includes at least one rotation seat 204, 114 adapted to receive the rotation pin 31, i.e. a corresponding portion of the pin 31. In practice, the wheel 3 is housed idle into the respective rotation seat 114, 204.

The rotation seat 204, 114 is open on an edge 211, 1211 of a respective wall 20 by means of an opening 203. It follows that the rotation seat 204, 114 is open toward the edge 211, 1211 by means of the above-mentioned opening 203. The group formed by the rotation seat 204, 114 and the opening 203 defines a sort of notch or recess between two wall portions 201 of each wall 20.

The insertion zone 203 is the proximal or initial zone of the notch or recess, whereas the rotation seat 204, 114 is the end or final zone of the notch or recess. Such a notch may be facing toward a floor P for supporting the support and movement equipment 1, 10, 110, 1010, so that the wheel/roller 3 be mainly exposed downward, e.g. during use of the support and movement equipment 1, 10, 110, 1010 in the undercarriage mode.

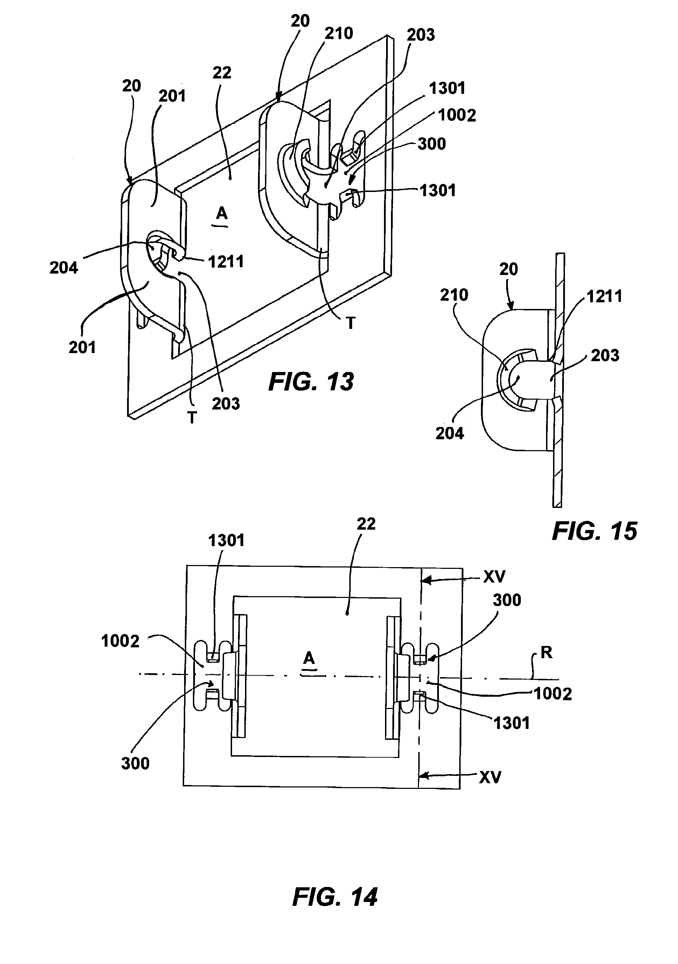

Such a notch may be facing the opposite side with respect to a floor P, therefore upward, so that the wheel/roller 3 be mainly exposed upward and foster movement of the load thereabove, e.g. during a use of the support and movement equipment 1, 10, 110, 1010 in the roller bed mode. It has to be noted that in the embodiments of Figures 2-12, the edge 211 is an edge of the wall 20 which is opposite to the bending zone T, i.e., opposite to the plate 2 (therefore the wheel 3 is inserted from the side opposite to the plate 2), whereas in the embodiment of Figures 13-17 the edge 1211 is an edge of the wall 20 that coincides with the bending zone T and therefore faces toward or is adjacent to the plate 2 (therefore the wheel 3 is inserted from the side of the plate 2).

In other words, in the embodiments of Figures 2-12, the insertion zone or opening 203 is on the opposite or distal side with respect to the plate 2, whereas in the embodiment of Figures 13-17 the insertion zone or opening 203 is on the side of the plate 2, or proximal to the plate 2.

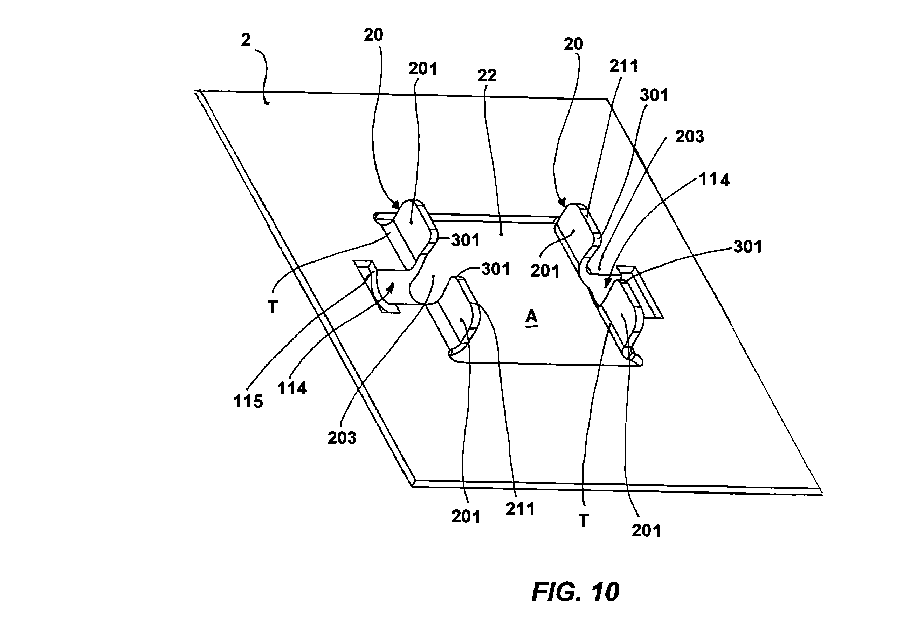

Furthermore, it is observed that in the embodiments of Figures 2-9, 13-17, the rotation seat 204 is obtained in the walls 20, whereas in the embodiment of Figures 10-12, the rotation seat 114 is obtained in the plate 2.

Apart from these differences, in all embodiments of Figures 2-17 the rotation seat 204, 114 has an axis of rotation R extending in a direction substantially orthogonal to a direction of loading on the support plate 2.

Therefore, the opening 203 allows an insertion of the rotation pin 31 into the rotation seat 204, 114, starting from the peripheral edge 211, 1211. In practice, the opening 203 connects the rotation seat 204, 114 to an external zone. An insertion path of the rotation pin 31 which crosses the insertion zone 203 and the rotation seat 204, 114 is defined by a broken line L in the figures. The insertion path L is orthogonal to the axis of rotation R.

According to another aspect of the present disclosure, the support and movement equipment 1, 10, 110, 1010 includes, associated to the opening 203, retaining elements 300, also referred to as holding elements, which are adapted to prevent an accidental coming out, e.g. by gravity, of the rotation pin 31 from the rotation seat 204, 114 through the opening 203.

In practice, the retaining elements 300 are such that, when the pin is housed into the rotation seat 204, 114 during a standard use of the support and movement equipment 1, 10, 110, 1010, both in roller bed mode and in undercarriage mode, no risk is run of an accidental detaching or coming out of the pin 31 from the rotation seat 204, 114, with a detaching of the wheel 3 from the support plate 2.

It is understood that the rotation pin 31 may come out from the rotation seat by forcing, or generally by a violation of the retaining elements 300.

Hereinafter the individual embodiments of the support and movement equipment 1, 10, 110, 1010 are described in greater detail.

In particular, in the example of Figures 2, 4-6, a first embodiment of the support and movement equipment 1 is illustrated.

Each of the retaining elements 300 is a part 301 of one of the above-mentioned wall portions 201, i.e. the retaining elements 300 are formed by parts or appendages of the above-mentioned wall portions 201. Each one part 301 of said wall portions 201 is projecting toward the other one, and is arranged in the region of the opening 203.

More specifically, each part 301 of the wall portions 201 is lobe-shaped and has a rounded contour.

In practice, such lobes 301 or parts are coplanar, facing the one to the other and separated by a distance L1. The distance L1 between the lobes 301 is shorter than a diameter D1 of the rotation seat 204.

It follows that, in this exemplary embodiment, the retaining elements 300 are wall portions or lobes 301, determining a narrowing of the opening 203 with respect to the rotation seat 204, and adapted to prevent the coming out of the rotation pin 31 from the rotation seat 204.

In the exemplary embodiment, the lobes 301, and optionally further portions of the edges 211 contiguous to each lobe 301, are bevelled and rounded. Such a bevelled and rounded shape facilitates, in the region of the opening 203, the insertion of the rotation pin 31.

In the exemplary embodiment, moreover, the lobes 301 can deform elastically. In particular, by "elastic deformation" it is meant a reversible change of shape and dimensions or position of the lobes 301, following the application of a stress.

Essentially, the lobes 301 can deform, and in particular expand or contract, and return to an original shape and dimension once the stress ceases. The bevelled and rounded shapes of the lobes 301 and of the edge portions 211, and the possibility, for the lobes 301, to deform elastically, facilitate a one-way insertion of the rotation pin 31.

When the pin 3 is housed into the rotation seat 204, the lobes/parts 301 hold the pin 31 to prevent a coming out of the latter from the rotation seat 204.

Referring to Figures 3, 7-9, a second embodiment of the support and movement equipment 10 is illustrated.

For this other exemplary embodiment, denoted by reference number 10, elements or parts which have the same function and structure retain the same reference number as in the embodiment previously described, and therefore are not described in detail again. In particular, this second embodiment differs from the first embodiment mainly for the configuration of the retaining elements.

More precisely, in this embodiment the retaining elements 300 include tabs 302, facing and opposite to each other, which are associated to the wall portions 201 in the region of the opening 203.

In particular, the tabs 302 are converging and in a spaced apart relationship up to a minimum distance L2.

Moreover, in the exemplary embodiment illustrated, the tabs 302 are formed as a single piece with each wall 20 and are projecting, with respect to the wall 20, by respective bends K.

In other words, the tabs 302 are bent converging to the outside, in a direction opposite to the housing A, and form an angle of about 45° with respect to the wall 20.

In the exemplary embodiment, the tabs 302 can deform elastically. In particular, the tabs 302 can rotate with respect to the bend K, and expand to facilitate the insertion of the rotation pin 31.

To foster elastic deformation, the walls 20 include each a nook or indentation 320, interposed between a respective tab 302 and the rotation seat 204.

When the pin 3 is housed into the rotation seat 204, the tabs 302 hold the pin 3 to prevent a coming out thereof from the rotation seat 204.

According to another aspect of the present disclosure, in the exemplary embodiments illustrated in Figures 2-9, ,appendages 210 or deep-drawn parts are associated to the walls 20 in the region of the rotation seats 204, the appendages 210 extending along the rotation seat 204. In particular, the appendages 210 are edges or portions of sheet metal arranged along the semicircular profile of the rotation seats 204, oriented orthogonally with respect to the walls 20.

More specifically, the appendages 210 are prolongations or extensions of the walls 20 facing the opposite side with respect to the housing A.

The appendages 210 increase the contact surface or zone intended to receive the rotation pins 31 of the wheels 3.

Referring to Figures 10-12, a third embodiment of the support and movement equipment 110 is illustrated.

Also for this other exemplary embodiment, denoted by reference number 110, elements or parts which have the same function and structure retain the same reference number as in the embodiments previously described, and therefore are not described again in detail.

In particular, as anticipated above, this embodiment differs from the preceding embodiments in that the rotation seat 114 is obtained in the support plate 2, rather than in the walls 20, i.e. the support plate 2 includes the rotation seat 114. For instance, the rotation seat 114 may be obtained on the support plate 2 so that a portion 115 of the material of the support plate 2, separated from the remainder of support plate 2, be bent and sharply curved with respect to the support plate 2. More specifically, the portion 115 is cut with respect to the support plate 2.

In this embodiment, since in the walls 20 only the opening 203 or insertion zone is present, the walls 20 can have an extension smaller than the walls 20 of the preceding embodiments. Moreover, such walls 20, analogously to the first embodiment of the support and movement equipment 1, have the above-mentioned edges 301 for retaining the pin 31 in the rotation seat 114.

Referring to Figures 13-17, a fourth embodiment of the support and movement equipment 1010 is illustrated.

Also for this exemplary embodiment, denoted by reference number 1010, elements or parts having the same function and structure retain the same reference number of the embodiments previously described, and therefore are not described again in detail.

In particular, as anticipated above, this embodiment differs from the preceding embodiments in that the opening 203 is interposed between the support plate 2 and each wall 20, so that the wheel 3 be inserted from the side of the support plate 2, toward the rotation seat 204 which is associated to each wall 20.

Also in this embodiment, in the region of the rotation seats 204 appendages or deep-drawn parts 210 are present, extending along the rotation seat 204. In particular, the appendages 210 are sheet metal edges or portions arranged along the semicircular profile of the rotation seats 204, oriented orthogonally with respect to the walls 20.

To allow an insertion of the pin 31, in the support and movement equipment 1010 of Figures 13-17 the opening 203 extends to the region of the support plate 2, to form a window 1002 in the support plate 2. Retaining tabs or lobes 1301 are obtained in the support plate 2, in the region of said window 1002, to contain any motion of the pin 31.

With reference to the annexed figures, another aspect of the support and movement equipment 1, 10, 110, 1010, more specifically related to the wheel or roller 3 and to the rotation pin 31, is illustrated.

In particular, the wheel or roller 3 and the rotation pin 31 form a single piece, and are made of abrasion-resistant material, like e.g. Teflon. The rotation pin 31 has an axis of rotation R and, coherently to the geometry of the parts described above, is received with adequate clearance/play in the rotation seat 24 to allow rotation, and has a diameter D2 greater than the distance L1 between the lobes 301, 1301 and than the minimum distance L2 between the tabs 302.

In a variant embodiment, the rotation pin 31 is made of a material different with respect to the material of which the wheel is made, and is firmly assembled to the wheel 3 so as to form an individually manipulable single body.

For instance, the wheel 3 may be made by co-injection of a wheel of plastic with a pin of metal, such as, e.g., iron or steel.

The wheel 3 further includes a contact zone 32, intended for rolling on a surface or floor P.

According to further embodiments of the present disclosure, the support plate 2 is made of a material harder that the material of the wheel 3.

According to further embodiments of the present disclosure, the same support plate 2 is made so as not to be able to deform.

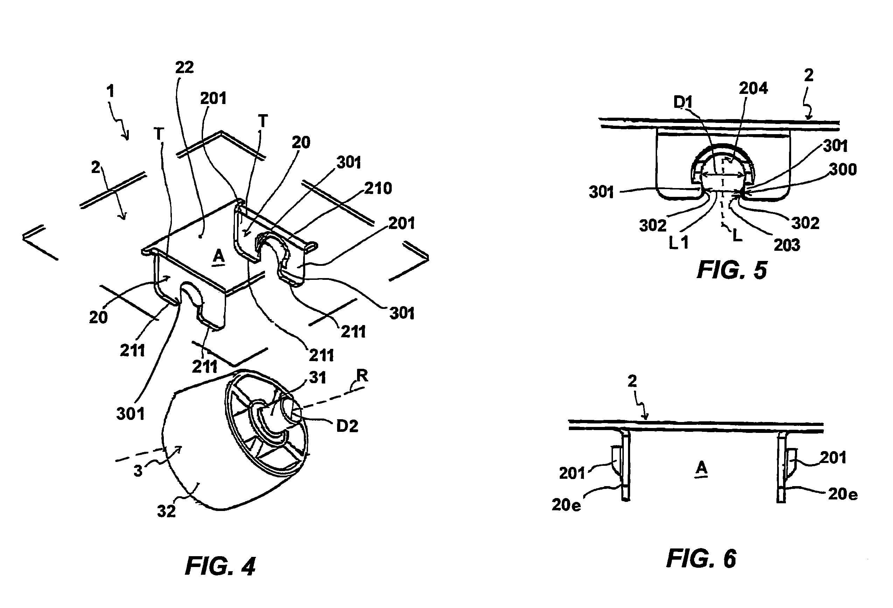

In the exemplary embodiment, with particular reference to Figure 4, a method for assembling a support and movement equipment 1, 10, 110, 1010 is now described.

Initially, the rotation pin 31 is arranged and inserted in the two openings 203. From this position, by applying a force along the insertion path L orthogonally to the axis of rotation R (toward the support plate 2 in the embodiments of Figures 2-12 and toward the walls 20 in the embodiments of Figures 13-17), the rotation pin 31 and the lobes 301, 1301, or the tabs 302, deform elastically.

Thus, the rotation pin 31 is inserted into the two rotation seats 204, 114.

It follows that the elastic deformation can allow the rotation pin 31 to overcome the retaining elements 300.

Once inserted into the rotation seat 204, 114, the rotation pin 31 cannot come out of the rotation seat 204, 114, owing to the presence of the lobes 301, 1301, or of the tabs 302, after those have returned to an undeformed condition.

The support and movement equipment according to the present disclosure, and described hereto by way of example, can make the support and movement equipment more inexpensive. In fact, being able to include only two parts, such as, e.g., the support plate and the wheel-pin unit, it is more inexpensive both from the standpoint of the cost of components or parts, and from a standpoint of assembling complexity, or of the steps needed for the assembling itself.

In fact, e.g., it can make unnecessary an implementation of retainers on the support plate.

In fact, with regard to the assembling, it is evident how a smaller number of pieces to be assembled translates into less assembling time, and therefore into a lesser cost associated to the assembling itself. Moreover, it has to be noted how the described support and movement equipment requires no additional machining following the assembling of support plate and wheel, further decreasing the assembling time.

Thus, the support and movement equipment, crossbar-shaped and including only one plate and two wheel-pin units as schematically indicated in Figure 1, can be of easy and rapid production.

In addition, the described support and movement equipment can reduce costs and times associated to the maintenance of such a device. For instance, in case of wheel wear or breakage, it is possible to replace it in a short time, by applying to the wheel a pull in a direction opposite to that applied during the assembling. Once the wheel has been removed from the housing, it is possible to rapidly proceed with the assembling of a new wheel.

Moreover, the described support and movement equipment can reduce wear of the parts, and in particular of the wheel. The deep-drawn parts associated to the rotation seats in fact widen the contact surface between the rotation pin and the housing, decreasing wear and therefore the wear of the parts. The deep-drawn parts can moreover contribute to reduce the presence of imperfections or roughnesses in the region of the rotation seats, further decreasing the possibility of wear between constituent parts of the support and movement equipment.

The subject-matter of the present disclosure has hereto been described with reference to preferred embodiments thereof. It is understood that there may be other embodiments referable to the same inventive concept, all falling within the protective scope of the claims set forth hereinafter.

## Claims

1. A support and movement equipment (1, 10, 110, 1010) for supporting a load, said support and movement equipment (1, 10, 110, 1010) including at least one support plate (2) and two walls (20) firmly associated to said support plate (2) and facing the one to the other in a spaced apart relationship, said support and movement equipment (1,10) comprising at least one wheel, or roller, (3) provided with a rotation pin (31), wherein the wheel (3) is interposed between the two walls (20) and wherein said support and movement equipment (1, 10, 110, 1010) includes at least one rotation seat (204, 114) adapted to receive the rotation pin (31), said rotation seat (204, 114) being open on an edge (211, 1211) of a respective wall (20) by means of an opening (203), said opening (203) being adapted to allow an insertion of the rotation pin (31) into the rotation seat (204, 114).

2. The support and movement equipment (1, 10, 110, 1010) according to claim 1, wherein the opening (203) defines a direction of insertion (L) for said pin (31) and said direction of insertion (L) is orthogonal to an axis (R1) of rotation of the pin (31) into the rotation seat (204, 114).

3. The support and movement equipment (1, 10, 110, 1010) according to claim 1 or 2, wherein said support plate (2) is a piece of metal sheet and the walls (20) are elements integrally formed as a single piece with the support plate (2).

4. The support and movement equipment (1, 10, 110, 1010) according to claim 3, wherein each of said walls (20) is a piece of metal sheet (21) cut out from the metal sheet and bent projecting over a face of the metal sheet (21).

5. The support and movement equipment (1, 10, 110, 1010) according to any one of the preceding claims, wherein said opening (203) is open on an edge of said wall (20) which is opposite to said support plate (2).

6. The support and movement equipment (1, 10, 110, 1010) according to any one of the claims 1 to 4, wherein said opening (203) is open on an edge (1211) of said wall (20) which is contiguous to or facing toward said support plate (2).

7. The support and movement equipment (1, 10, 110, 1010) according to any one of the preceding claims, wherein each wall (20) includes the rotation seat (204).

8. The support and movement equipment (1, 10, 110, 1010) according to any one of the preceding claims 1 to 6, wherein the support plate (2) includes the rotation seat (114).

9. The support and movement equipment (1, 10, 110, 1010) according to any one of the preceding claims, wherein said support and movement equipment (1, 10, 110, 1010) includes retaining elements (300) adapted to prevent a coming out of the rotation pin (31) from the rotation seat (204, 114) through the opening (203).

10. The support and movement equipment (1, 10, 110, 1010) according to claim 1, wherein said opening (203) defines two wall portions (201) opposite to each other, and each of said retaining elements (300) is a part (301) of one of said wall portions (201) projecting toward the other one of said wall portions (201).

11. The support and movement equipment (1, 10, 110, 1010) according to any one of the claims 1 to 9, wherein said opening (203) defines two wall portions (201) opposite to each other, and said retaining elements (300) include tabs (302), each tab being integrally associated to a respective wall portion (201).

12. The support and movement equipment (1, 10, 110, 1010) according to any one of the claims 1 to 9, wherein said opening (203) extends into said support plate (2) to form a window (1002), and said retaining elements (300) are associated to said window (1002).

13. The support and movement equipment (1, 10, 110, 1010) according to any one of the preceding claims, wherein the rotation pin (31) is made in a single piece with the wheel (3).

14. The support and movement equipment (1, 10, 110, 1010) according to any one of the preceding claims, wherein said support and movement equipment (1, 10, 110, 1010) is a supporting undercarriage.

15. A crossbar for supporting an electrical household appliance (100), wherein said crossbar for an electrical household appliance includes a support and movement equipment (1, 10, 110, 1010) as defined in any one of the claims 1 to 14.

16. A roller bed of a gravity apparatus, including a support and movement equipment (1, 10, 110, 1010) according to any one of the preceding claims 1 to 14.

17. A method for assembling a support and movement equipment (1, 10, 110, 1010), including the steps of:
- providing a support plate (2) and two walls (20) firmly associated to said support plate (2) and facing the one to the other in a spaced apart relationship;
- providing a wheel, or roller, (3) provided with a rotation pin (31) between the two walls (20);
- inserting the rotation pin (31) into a respective rotation seat (204, 114) passing through an opening (203), wherein said opening (203) puts the rotation seat (204, 114) in communication with an edge (211, 1211) of the wall (20);
- applying a pressure on the wheel or roller (3) and/or on the rotation pin (31) until the rotation pin (31) is housed into the respective rotation seat (204, 114).

18. The method for assembling the support and movement equipment (1, 10, 110, 1010) according to claim 17, wherein the applying of said pressure causes an overcoming of retaining elements (300) associated to said opening (203) and an elastic deformation of said retaining elements (300) and/or said rotation pin (31).

19. The method for assembling the support and movement equipment (1, 10, 110, 1010) according to claim 17 or 18, wherein the pin (31) is inserted along a direction of insertion (L) orthogonal to an axis of rotation (R) of the pin (31) into the rotation seat (204, 114).
